# EUROPEAN PATENT SPECIFICATION

(11) **EP 3 594 136 B1**
(45) Date of publication and mention of the grant of the patent: **16.12.2020**
(21) Application number: 19185185.6
(22) Date of filing: 09.07.2019
(51) Int. Cl.: B65B 25/06, B29C 65/00, B65B 25/10, B65B 47/06, B65D 85/76

(54) **A PROCESS FOR MANUFACTURING A PACKAGING FOR SOFT CHEESE, A DEVICE FOR CARRYING OUT THE PROCESS AND PACKAGES OBTAINED**
VERFAHREN ZUR HERSTELLUNG EINER VERPACKUNG FÜR WEICHKÄSE, VORRICHTUNG ZUR DURCHFÜHRUNG DES VERFAHRENS UND ERHALTENE VERPACKUNGEN
PROCÉDÉ DE FABRICATION D'UN CONDITIONNEMENT POUR DU FROMAGE MOLLE, UN DISPOSITIF POUR RÉALISER LE PROCÉDÉ ET CONDITIONNEMENTS AINSI OBTENUS

(30) Priority: 13.07.2018 IT 201800007159
(43) Date of publication of application: 15.01.2020
(73) Proprietor: Gruppo Smaic Macchinari Industriali S.r.l., 22078 Turate (IT)
(72) Inventor: SIGNORACCI, Federico, I-22078 Turate (IT); SIGNORACCI, Roberto, I-22078 Turate (IT)
(74) Representative: Di Bernardo, Antonio

(56) References cited:
- WO-A1-99/35057
- WO-A1-2009/092966
- FR-A- 1 274 348
- FR-A1- 2 783 802
- GB-A- 929 141

## Description

### DESCRIPTION OF THE INVENTION

### Field of the invention

The present invention relates to a method for producing a packaging for a pat of soft cheese, to a sealing device for implementing the method and to the packagings obtained, as well as to a machine containing the sealing device according to the invention.

### Technological background

Soft pats in the molten or semi-pasty state require, as is known, an open box-shaped type packaging, sealed at the top by a cover element, applied after introducing the pat of cheese in the loose state in the open box-shaped container, and against which a protruding upper edge of the open box-shaped container is then folded perimetrically.

A packaging of this type and the relative production method are disclosed in document EP 1 836 110 B1.

In these packagings, as well as in other packagings of this type, a hermetic seal of the packaging is not provided, so, at any time, air can enter the packaging, in contact with the pat of cheese, for example, during the handling for introducing a plurality of packagings into a transport box, during transport, during unpacking and arranging the individual packagings on the shelves for sale in shops, supermarkets and the like. Amongst other things, this drawback results in a considerable reduction in the integral storage time of the cheese in its packaging and in a loss of money and product.

From document EP 0 131 431 a packaging is in fact known for blocks of cheese to be matured in the packaging itself, which is formed by a container open at the top and by a lid part with a side edge to be introduced into the open container, wherein the die-cuts of the hollow container and of the cardboard lid are first glued to a respective further lid and container die-cut made of heat-sealable material, the dimensions of which are larger than the respective lid and hollow body cardboard die-cuts, so as to have, after inserting the lid into the container, the opposite protruding edges thereof, which can be heat-sealed with outer angular and inner central sealing bars operating in two steps to obtain, first a sealing in the angular areas and then of the central areas with overlapping sealing areas. Finally, tubes are inserted into the container to remove air and then sealed. A reinforcement panel is also arranged in the lid to have a smooth surface of the block of matured cheese.

This solution has several disadvantages. Firstly, the need to use two die-cuts both for the open container and for the lid, as well as the need to glue the rigid die-cuts beforehand to the heat-sealable die-cuts and require the application of a reinforcement panel. This results in an elevated expenditure of materials and prolonged process times, also due to the taking of air from the packaging.

Also the sealing in two steps, first of the angular areas and then of the central areas, with mutual surmountings, extends the production times on the one hand and requires an elevated number of sealing bars, which are movable with correspondingly expensive control means. WO 99/35057 A1 also discloses a method according to the preamble of claim 1.

### Object of the invention

The object underlying the present invention is to provide a method and a device for producing packagings for pats of soft cheese, which are sealed hermetically, in a reliable manner, so as to overcome the drawbacks of the prior art.

This object is reached, according to the invention, by a method for producing a packaging for a pat of soft cheese, with a device for implementing the method and with the packagings obtained, which have the features of claims 1, 2 and 5. Further advantageous features can be found in the characterizing parts of the respective dependent claims.

Several important advantages are obtained with the teachings of the invention.

Firstly, the packagings obtained have a reliable seal, so a reliable expiry date can be indicated for the product contained.

The seal provided can be achieved for the packagings using traditional synthetic materials.

Implementing the seal by means of sealing, or heat-sealing, can be achieved in one single step and quickly, practically without slowing down the production cycles.

The packagings provided do not have protruding parts, which can interfere with a normal insertion or filling of the same in standard commercial containers for transporting the packagings from the manufacturing companies to the shops, supermarkets and similar distribution points.

The packagings provided allow a continuous manufacturing cycle without operator intervention.

A further advantage can be seen in the fact that the quick sealing time and implementation of the heat-sealing have practically no effect on the contents of the packaging, which can also consist of another kind of foodstuff, as desired.

Expulsion of the air from the packaging occurs automatically by applying the lid over the loose portion of cheese introduced.

A limited number of sealing bars is required, i.e. of only angular bars.

### Brief description of the drawings

Further features and advantages of the method, device and packagings obtained according to the invention, can be seen from the following description of a preferred embodiment of the device for implementing the method proposed and of a packaging, illustrated schematically by way of a non-limiting example and on different scales for greater clarity of vision of the appended drawings, wherein:
figure 1 shows an exploded perspective view of the principle of producing a known packaging for pats of soft cheese formed by a box-shaped container open at the top and by a cover element, which can be inserted therein,

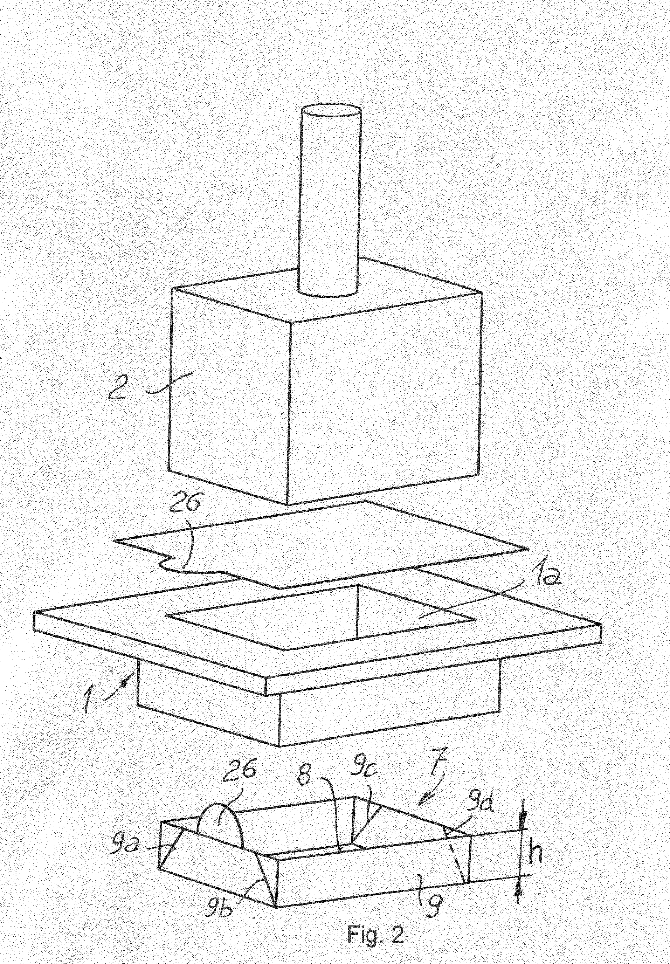

figure 2 shows a similar exploded perspective view for producing a packaging according to the invention, which packaging is equally formed by a box-shaped element, open as in figure 1, and by a cover element similar to a lid with a bottom and a perimeter edge folded angularly,
figure 3 shows a schematic perspective view of the continuous perimeter sealing device of the packaging according to the invention,
figure 4 is a raised side view of the sealing device of figure 3, according to arrow A,
figure 5 is a section according to the line D-D of figure 4,
figure 6 is a raised front view of the sealing device according to arrow B,
figure 7 is a section according to the line E-E in figure 6,
figure 8 is a view from above of the sealing device in figure 3,
figure 9 shows a perspective view of the sealing device rotated by 90° with respect to the representation in figure 3,
figure 10 shows a cover element similar to a lid according to the invention above an open box-shaped container for forming a packaging according to the invention,
figure 11 shows a perspective view of the sealing device inserted in the lid of the packaging in a closed, or rest, position,
figure 12 shows a similar perspective view as in figure 11, with the sealing device in the open, or sealing, position,
figure 13 shows a perspective view of a packaging according to the invention with continuous perimeter sealing, after the sealing step, and
figure 14 shows a similar perspective view of a packaging according to the finished invention, i.e. after the inward folding of the sealed edge.

### Description of preferred embodiments

In the different figures, identical parts have the same reference indices.

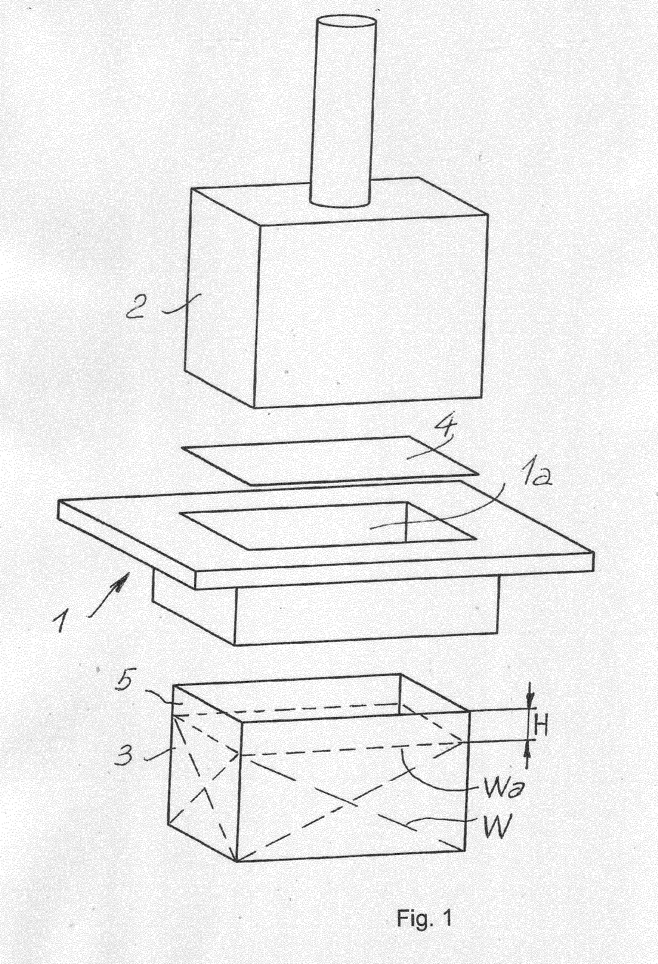

At first, reference is made to figure 1 showing an embodiment of the prior art mentioned above, and in which, in a machine, not illustrated, comprising a matrix 1 and a die 2 starting from a die-cut, not illustrated, which is substantially rectangular and with pre-incision lines in the angular areas, it is folded in the matrix 1 moving the die along a lowering travel of the die 2 forming a box-shaped container, which is open at the top 3, into which a pat or portion of soft cheese W is first introduced in the molten or semi-pasty state, indicated with a dotted line and with an upper side Wa, and then, after the lifting stroke of the die 2, a cover sheet 4 is lowered onto the pat W the dimensions of which are slightly smaller at the opening 1a of the matrix 1 and the remaining upper perimeter edge 5 of the open box-shaped container 3 is then folded inwards onto the cover sheet 4.

In the substantially rectangular starting die-cut, used to form the open box-shaped container 3, a protruding pull-tab can be comprised, not illustrated, to facilitate the manual opening of the packaging.

Packagings of this type have the drawbacks and disadvantages described above.

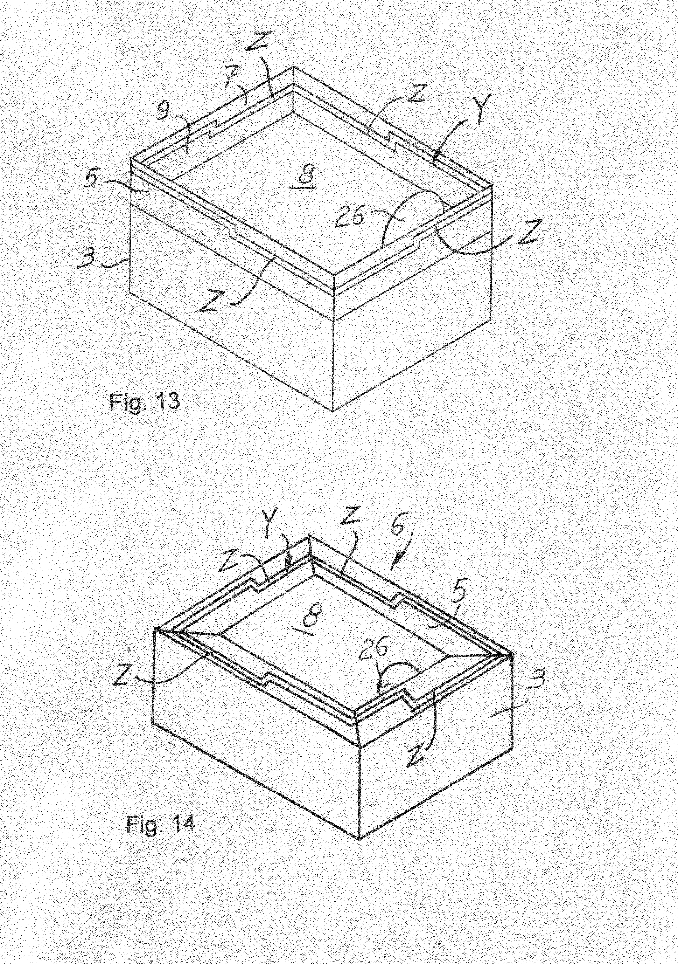

For the purpose of providing the finished packaging 6 according to the invention, figures 13 and 14, a reliable hermetic seal towards the pat of soft cheese W, or the like, instead of a cover sheet 4 an actual lid 7 is inserted into the box-shaped container 3 formed by a bottom 8 and by a perimeter edge 9 protruding orthogonally from said bottom 8.

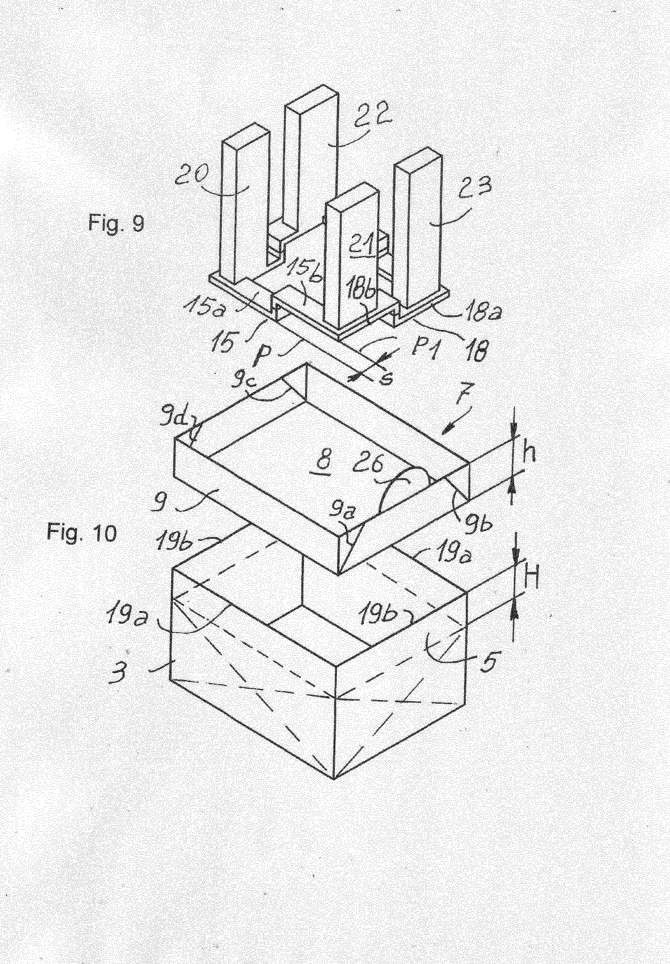

The lid 7 is obtained starting from a substantially rectangular die-cut the surface of which is larger than the inlet opening 1a of the matrix 1, wherein, in the angular areas, the protruding edge is folded on itself, as indicated by the oblique lines 9a, 9b, 9c and 9d, fig. 10, thus, a lid 7 is obtained with a continuous perimeter edge 9, i.e. without gaps. The height h of this perimeter edge 9 substantially corresponds to the height H of the free upper edge 5 of the open box-shaped containers 3 after inserting the pat of soft cheese W. The lid 7 is introduced into the open end of the box-shaped container 3, after which the step of sealing, or heat-sealing, takes place between said lid 7 and the box-shaped container 3, as explained below.

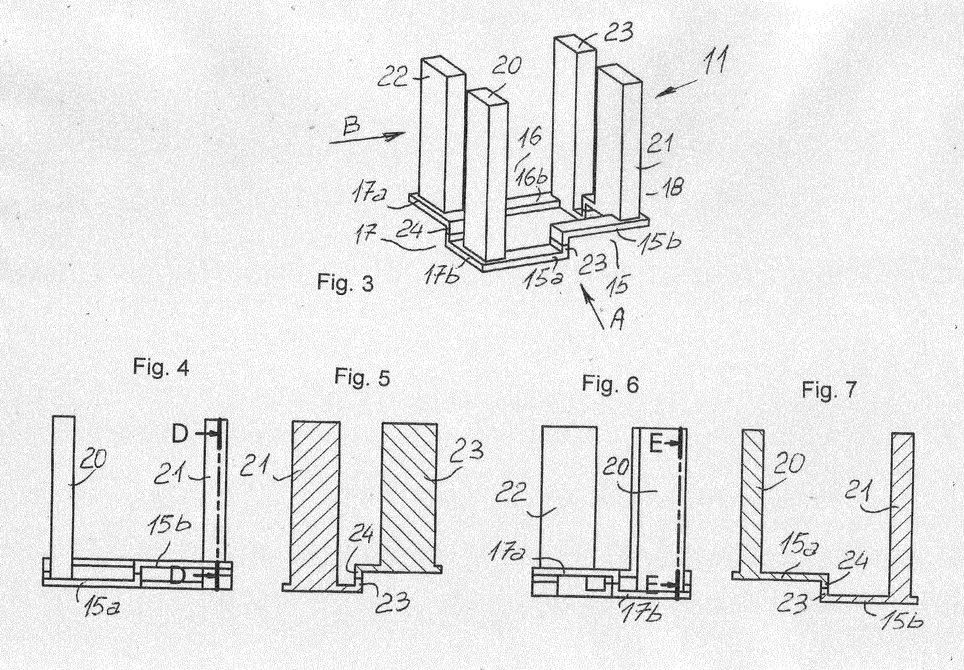

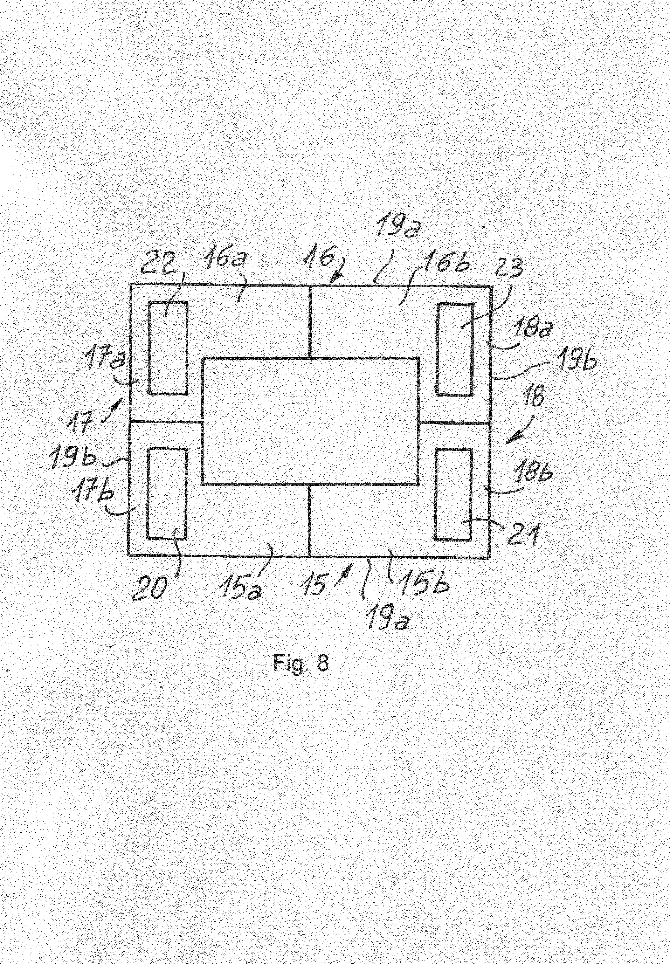

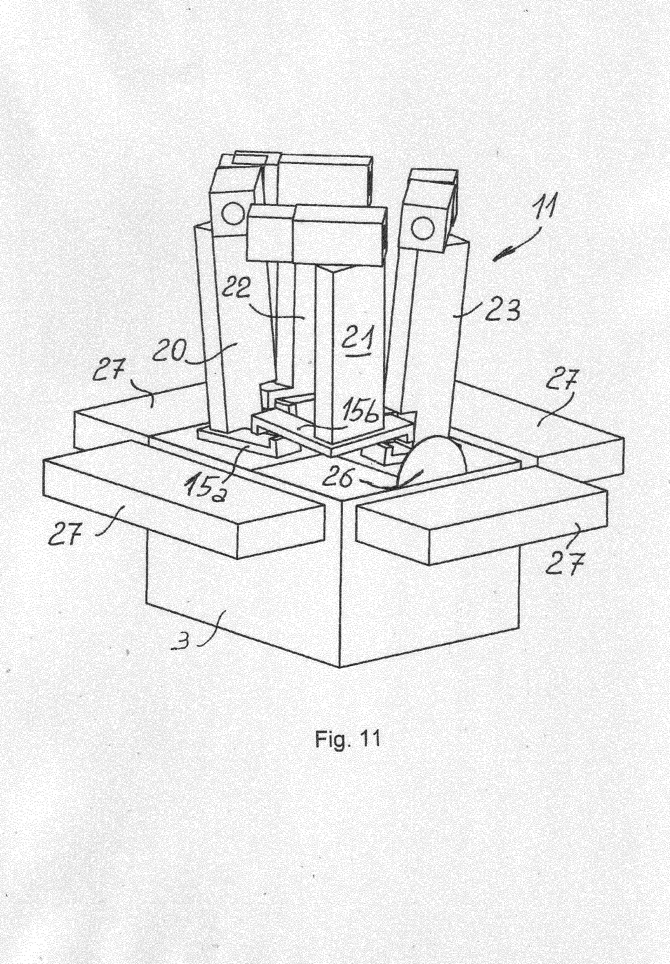

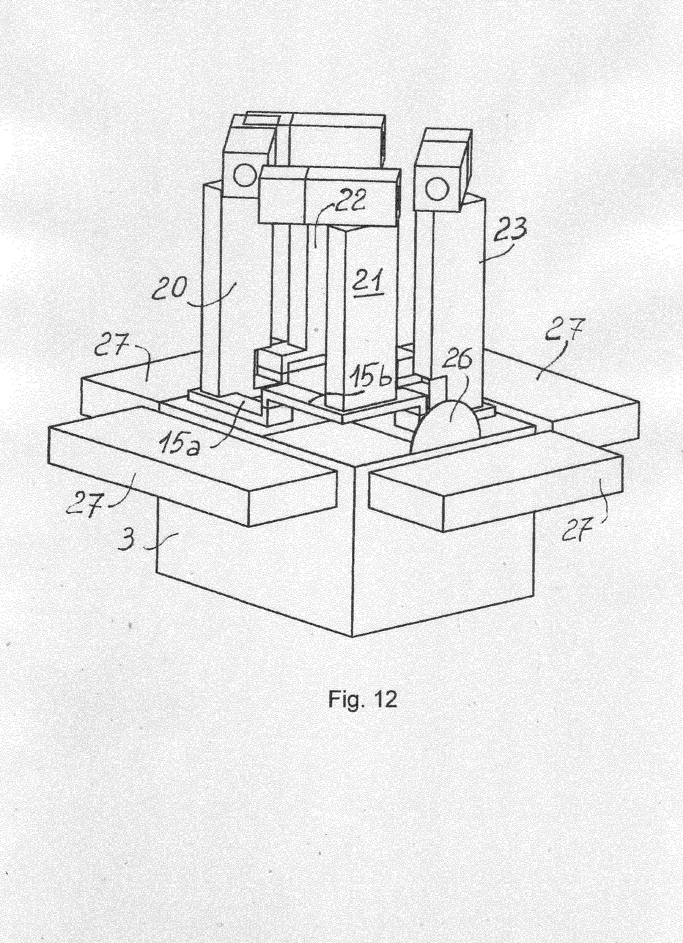

To form the continuous sealing Y on the perimeter edge 9 of the lid 7 inserted at the top in the box-shaped container 3 according to the teaching of the invention a sealing group 11 is included, comprising, in the illustrated case of a rectangular plan packaging 6, two longitudinal sealing bars 15, 16 and two transverse sealing bars 17 and 18 the lengths of which correspond to the lengths of the longitudinal 19a and transverse sides 19b of the open box-shaped container 3 respectively, or of the lid 7 of the packaging 6. According to the invention, fig. 8, said sealing bars 15, 16, 17, 18 are formed respectively by two sealing semi-bars 15a, 15b; 16a, 16b; 17a, 17b and 18a, 18b, which are comprised movable in the respective longitudinal and transverse direction between a longer working or sealing position, as illustrated in figures 3, 8, 9 and 12, and a shorter rest position and, in the illustrated example, with surmounting, as can be seen, for example, in figure 11.

The passage from the rest position to the sealing position, and vice versa, is achieved by functionally associating the stems 20, 21, 22, 23 for supporting the sealing semi-bars 15, 16, 17 and 18 with a known vertical control cone, not illustrated, which is moveable axially to and fro, upwards and downwards.

As can be seen in particular from figures 3, 8, 9 and 12, each stem 20 - 23 supports two angularly arranged semi-bars, namely transverse to each other in plan, wherein the semi-bars 15a and 17b of the stem 20 and the semi-bars 18a and 16b of the stem 23 extend on a common plane P lower with respect to the semi-bars 15b and 18b of the stem 21 and 17a and 16a of the stem 22, which extend in a common upper plane P1, wherein the difference in height "s" between said two planes P and P1 is contained in the height of the perimeter edges 5 and 9 provided from time to time.

Moreover, note that the ends of the lower sealing semi-bars have a step 23 folded angularly upwards, while the upper sealing semi-bars have a step 24 folded angularly downwards, so that, in the sealing position, the steps 23 and 24 overlap each other.

Finally, a tab is denoted with 26 for facilitating the manual opening of the packaging. The same can be omitted or replaced by other types of tabs.

To guarantee a continuous and uniform sealing Y of the packaging 6, movable and/or tiltable stop bars 27 are further comprised in the sealing group 11, which can be brought close against the sealing bars 15, 16, 17, 18 during the sealing and distanced therefrom after the sealing, in a known manner.

The operation of the sealing device 11, to implement the method according to the invention, comprises the execution, in series, of the following steps:
a) a formation step in a matrix 1 of an open box-shaped container 3 starting from a die-cut made of heat-sealable material,
b) a step of introducing a pat or portion of soft cheese W in the molten or semi-pasty state into the open box-shaped container 3 leaving an upper perimeter edge 5 free,
c) starting from a die-cut the dimensions of which are larger than the opening 1a of the box-shaped container 3, forming a lid 7 with a bottom side 8 and an upper perimeter edge 9 by folding 9a, 9b, 9c and 9d of said edge 9 in the angular areas with formation of a closed perimeter edge 9,
d) a step of introducing the lid 7 into the open box-shaped container 3 above the pat of cheese W in the liquid or semi-pasty state,
e) continuous perimeter sealing Y between the edge 9 of the lid 7 and the upper edge 5 of the box-shaped container 3 with simultaneous air-tight sealing of the packaging 6, and
f) folding of said edges 9 and 5 sealed to each other towards the inside of the packaging 6 on the bottom 8 of the lid 7.

A detailed description of the control group of the widening cone of the stems 20-23 and for controlling the sealing bars 27 is dispensed with since said control group of the widening cone is known in itself.

According to the invention the continuous perimeter sealing Y has, on each side of the packaging, a letter Z-shaped development.

From the structural and functional description of the above method, it is recognized that with the method, the sealing device and the hermetic packaging according to the invention, the indicated object is effectively fulfilled and the stated advantages are obtained.

In practice, those skilled in the art can include modifications, variations or additions regarding, for example, the use of the hermetic packaging for other products and foodstuffs and non-foodstuffs, having another geometric shape, for example, such as a hard pat with a square base, or also for liquid products, or the use of sealing semi-bars of a sealing bar made telescopically, or sliding with respect to each other, or propose particular types of thermoplastic materials for creating packagings and so on, without thereby departing from the protective scope of the invention as described and claimed below.

## Claims

1. A method for producing a packaging for a pat of soft cheese, or the like, comprising the following steps:
a) a formation step in a matrix of an open box-shaped container,
b) a step of introducing the soft cheese pat in the molten or semi-pasty state into the open box-shaped container leaving an upper perimeter edge free,
c) starting from a die-cut the dimensions of which are larger than the open side of the box-shaped container, a step of creating a lid with a bottom side and an upper perimeter edge by folding said edge in the angular areas with formation of an entirely closed perimeter edge,
d) a step of introducing the lid into the open box-shaped container above the soft cheese pat,
e) a step of continuous perimeter sealing between the upper edge of the open box-shaped container and the perimeter edge of the lid with simultaneous airtight sealing of the formed packaging, and
f) a step of folding said edges sealed to each other inwards on the bottom of the lid,
**characterised in that** the sealing step comprises creating a continuous perimeter sealing, which has, on each side of the packaging, a step-like linear development similar to a stylised letter (Z).

2. A sealing device for executing the method according to claim 1, **characterised in that** it comprises, for each side of said open box-shaped container (3) or of the packaging (6) to be produced, a sealing bar (15, 16, 17, 18), each formed by two sealing semi-bars (15a, 15b; 16a, 16b; 17a, 17b; 18a, 18b) movable superimposed with respect to each other between a rest position, which is shorter than the length of the respectively associated side of said open box-shaped container (3), or the packaging (6) to be produced, and a working or sealing position, which is longer and corresponds respectively to the length of the respectively associated side of said open box-shaped container (3), or the packaging (6) to be produced, so that, in the sealing position, the sealing bars (15, 16, 17, 18) determine a continuous sealing (Y) on the entire perimeter (9) of the lid (7) and on the perimeter (5) of the open box-shaped container (3) with a step-development according to a stylised letter (Z), on each side of the packaging (6),
wherein, said sealing semi-bars (15a, 15 b; 16a, 16b; 17a, 17b; 18a, 18b) are supported pairwise at the angles of the packaging (6) to be produced and they are supported by a shank (20; 21; 22; 23) functionally associated to a known widening/closing cone, which is vertically movable.

3. A device according to claim 2, wherein on each longitudinal (19a) and transverse (19b) side of the open box-shaped container (3), or the packaging (6) the two sealing semi-bars (15a, 15b; 17b, 17a; 16a, 16b; 18a, 18b) are arranged on two horizontal and parallel planes (P1, P2), wherein in the opposite ends the lower semi-bars (15a, 17b; 16b, 18a) have an upward facing right-angled folding (23) and the upper semi-bars (17a, 16a; 15b, 18b) have a downward facing right-angled folding (24), wherein, in the sealing position, the two angular-foldings (23, 24) of each sealing bar (15; 17; 16; 18) are arranged one (24) over the other (23).

4. A device according to claim 3, wherein respectively, two semi-bars (15a, 17b; 18a, 16b; 15b, 18b; 17a, 16a) are arranged angularly on the same horizontal plane (P1; P2) and supported by a common control stem (20; 23; 21; 22), which are operatively associated with said vertical control cone, which is axially movable.

5. A sealed packaging (6) for a pat of soft cheese (W), or the like, supplied in the molten or semi-pasty state, comprising an open box-shaped container (3) made of synthetic heat-sealable material and a closing lid (7) equally made of heat-sealable material having a bottom side (8) and an angularly folded continuous perimeter edge (9), with angular areas (9a, 9b, 9c, 9d) folded on themselves, wherein the lid (7) is inserted into the open box-shaped container (3) above said pat (W), said box-shaped container (3) and said lid (7) are sealed to each other with a continuous perimeter sealing (Y), **characterised in that** the continuous perimeter sealing line (Y) has, on each side of the packaging (6), a step-like linear development similar to a stylised letter (Z).

6. A packaging according to claim 5, wherein in the die-cut of the lid (7) a tab (26) is provided for facilitating the opening of the packaging (6).

7. A machine for producing hermetically sealed packages (6) for pats of hard or soft cheese (W), wherein products are supplied loose in the molten or semi-pasty or liquid state, according to the method in claim 1, **characterised in that** it comprises a sealing device according to one of the claims from 2 to 4.

## Patentansprüche

1. Verfahren zur Herstellung einer Verpackung für ein Weichkäseportion oder dergleichen, umfassend die folgenden Schritte:
a) ein Formgebungsschritt eines offenen schachtelförmigen Behälters in einer Matrix,
b) ein Schritt, bei dem der Weichkäseportion in geschmolzenem oder halb-pastösen Zustand in den offenen schachtelförmigen Behälter eingebracht wird, wobei ein oberer Umfangsrand frei bleibt,
c) ausgehend von einer Stanzung, deren Abmessungen größer sind als die offene Seite des schachtelförmigen Behälters, ein Schritt zur Schaffung eines Deckels mit einer Unterseite und einem oberen Umfangsrand durch Falten dieses Randes in den Winkelbereichen unter Bildung eines vollständig geschlossenen Umfangsrandes,
d) ein Schritt des Einführens des Deckels in den offenen schachtelförmigen Behälter über der Weichkäseportion,
e) ein Schritt einer kontinuierlichen Umfangsversiegelung zwischen dem oberen Rand des offenen schachtelförmigen Behälters und dem Umfangsrand des Deckels bei gleichzeitiger luftdichter Versiegelung der geformten Verpackung, und
f) ein Schritt des Faltens der genannten Ränder, die nach innen auf der Unterseite des Deckels miteinander versiegelt sind,
**dadurch gekennzeichnet, dass** der Versiegelungsschritt das Erzeugen einer kontinuierlichen Umfangsversiegelung umfasst, die auf jeder Seite der Verpackung einen stufenartigen linearen Verlauf ähnlich einem stilisierten Buchstaben (Z) aufweist.

2. Versiegelungsvorrichtung zur Durchführung des Verfahrens nach Anspruch 1,
**dadurch gekennzeichnet, dass** sie für jede Seite des offenen schachtelförmigen Behälters (3) oder der herzustellenden Verpackung (6) eine Versiegelungsleiste (15, 16, 17, 18) umfasst, die jeweils aus zwei Versiegelungshalbleisten (15a, 15b; 16a, 16b; 17a, 17b; 18a, 18b) geformt ist, die übereinanderliegend zwischen einer Ruheposition, die kürzer als die Länge der entsprechenden zugeordneten Seite des offenen schachtelförmigen Behälters (3) oder der herzustellenden Verpackung (6) ist, und einer Arbeits- oder Versiegelungsposition, die länger ist und der Länge der jeweils zugeordneten Seite des offenen schachtelförmigen Behälters (3) bzw. der herzustellenden Verpackung (6) entspricht, bewegbar sind, so dass die Versiegelungsleisten (15, 16, 17, 18) in der Versiegelungsposition eine kontinuierliche Versiegelung (Y) auf dem gesamten Umfang (9) des Deckels (7) und auf dem Umfang (5) des offenen schachtelförmigen Behälters (3) mit einem stufenförmigen Verlauf gemäß einem stilisierten Buchstaben (Z) auf jeder Seite der Verpackung (6) bestimmen, wobei die Versiegelungshalbleisten (15a, 15b; 16a, 16b; 17a, 17b; 18a, 18b) paarweise an den Winkeln der herzustellenden Verpackung (6) abgestützt und von einem Schaft (20; 21; 22; 23) getragen werden, der funktionell einem bekannten Aufweit-/Schließkonus zugeordnet ist, der vertikal beweglich ist.

3. Vorrichtung nach Anspruch 2, wobei an jeder Längs- (19a) und Querseite (19b) des offenen schachtelförmigen Behälters (3) oder der Verpackung (6) die beiden Versiegelungshalbleisten (15a, 15b; 17b, 17a; 16a, 16b; 18a, 18b) auf zwei horizontalen und parallelen Ebenen (P1, P2) angeordnet sind, wobei
an den gegenüberliegenden Enden die unteren Halbleisten (15a, 17b; 16b, 18a) eine nach oben gerichtete rechtwinklige Abkantung (23) und die oberen Halbleisten (17a, 16a; 15b, 18b) eine nach unten gerichtete rechtwinklige Abkantung (24) aufweisen,
wobei die beiden Winkel-Abkantungen (23, 24) jeder Versiegelungsleiste (15; 17; 16; 18) in der Versiegelungsposition übereinander (24) angeordnet sind.

4. Vorrichtung nach Anspruch 3, bei der jeweils zwei Halbleisten (15a, 17b; 18a, 16b; 15b, 18b; 17a, 16a) winklig auf der gleichen horizontalen Ebene (P1; P2) angeordnet und von einem gemeinsamen Steuerschaft (20; 23; 21; 22) getragen werden, die mit dem vertikalen Steuerkonus verbunden sind, der axial beweglich ist.

5. Versiegelte Verpackung (6) für eine Weichkäse-Portion (W) oder dergleichen, die in geschmolzenem oder halb-pastösem Zustand bereitgestellt wird, umfassend einen offenen, schachtelförmigen Behälter (3) aus synthetischem, heißsiegelfähigem Material und einen Verschlußdeckel (7), der ebenfalls aus heißsiegelfähigem Material hergestellt ist sowie eine Unterseite (8) und einen winklig gefalteten, durchgehenden Umfangsrand (9) mit auf sich selbst gefalteten Winkelbereichen (9a, 9b, 9c, 9d) aufweist, wobei der Deckel (7) in den offenen schachtelförmigen Behälter (3) über der Portion (W) eingesetzt ist, wobei der schachtelförmige Behälter (3) und der Deckel (7) mit einer kontinuierlichen Umfangsversiegelung (Y) miteinander versiegelt sind, **dadurch gekennzeichnet, dass** die kontinuierliche Umfangsversiegelungslinie (Y) auf jeder Seite der Verpackung (6) einen stufenartigen linearen Verlauf ähnlich einem stilisierten Buchstaben (Z) aufweist.

6. Verpackung nach Anspruch 5, wobei in der Stanzung des Deckels (7) eine Lasche (26) vorgesehen ist, um das Öffnen der Verpackung (6) zu erleichtern.

7. Maschine zur Herstellung von hermetisch verschlossenen Verpackungen (6) für Hart- oder Weichkäse (W), wobei die Produkte lose in geschmolzenem oder halb-pastösem oder flüssigem Zustand gemäß dem Verfahren nach Anspruch 1 zugeführt werden, **dadurch gekennzeichnet, dass** sie eine Versiegelungsvorrichtung nach einem der Ansprüche 2 bis 4 umfasst.

## Revendications

1. Procédé pour produire un conditionnement pour une plaquette de fromage à pâte molle, ou analogue, comprenant les étapes suivantes :
a) une étape de formation dans une matrice d'un récipient en forme de boîte ouvert,
b) une étape d'introduction de la plaquette de fromage à pâte molle à l'état fondu ou semi-pâteux dans le récipient en forme de boîte ouvert en laissant un bord périphérique supérieur libre,
c) en partant d'une découpe à la forme dont les dimensions sont plus grandes que le côté ouvert du récipient en forme de boîte, une étape de création d'un couvercle avec un côté inférieur et un bord périphérique supérieur par pliage dudit bord dans les zones angulaires avec formation d'un bord périphérique entièrement fermé,
d) une étape d'introduction du couvercle, dans le récipient en forme de boîte ouvert, au-dessus de la plaquette de fromage à pâte molle,
e) une étape de scellement périphérique continu entre le bord supérieur du récipient en forme de boîte ouvert et le bord périphérique du couvercle avec scellement étanche à l'air simultané du conditionnement formé, et
f) une étape de pliage desdits bords scellés l'un à l'autre vers l'intérieur sur le côté inférieur du couvercle,
**caractérisé par le fait que** l'étape de scellement comprend créer un scellement périphérique continu, lequel a, sur chaque côté du conditionnement, un développement linéaire étagé similaire à une lettre stylisée (Z).

2. Dispositif de scellement pour mettre en œuvre le procédé selon la revendication 1, **caractérisé par le fait qu'**il comprend, pour chaque côté dudit récipient en forme de boîte ouvert (3) ou du conditionnement (6) à produire, une barre de scellement (15, 16, 17, 18), chacune formée par deux demi-barres de scellement (15a, 15b; 16a, 16b; 17a, 17b; 18a, 18b) mobiles de manière superposée l'une par rapport à l'autre entre une position de repos, qui est plus courte que la longueur du côté respectivement associé dudit récipient en forme de boîte ouvert (3), ou du conditionnement (6) à produire, et une position de travail ou de scellement, qui est plus longue et correspond respectivement à la longueur du côté respectivement associé dudit récipient en forme de boîte ouvert (3), ou du conditionnement (6) à produire, de telle sorte que, dans la position de scellement, les barres de scellement (15, 16, 17, 18) déterminent un scellement continu (Y) sur toute la périphérie (9) du couvercle (7) et sur la périphérie (5) du récipient en forme de boîte ouvert (3) avec un développement étagé selon une lettre stylisée (Z), sur chaque côté du conditionnement (6), lesdites demi-barres de scellement (15a, 15b ; 16a, 16b ; 17a, 17b ; 18a, 18b) étant supportées par paires aux angles du conditionnement (6) à produire et étant supportées par une tige (20 ; 21; 22 ; 23) associée de manière fonctionnelle à un cône d'élargissement/fermeture connu, lequel est mobile verticalement.

3. Dispositif selon la revendication 2, dans lequel, sur chaque côté longitudinal (19a) et transversal (19b) du récipient en forme de boîte ouvert (3), ou du conditionnement (6), les deux demi-barres de scellement (15a, 15b ; 16a, 16b ; 17a, 17b ; 18a, 18b) sont disposées sur deux plans horizontaux et parallèles (P1, P2), dans lequel, dans les extrémités opposées, les demi-barres inférieures (15a, 17b ; 16b, 18a) ont un pliage à angle droit orienté vers le haut (23) et les demi-barres supérieures (17a, 16a ; 15b, 18b) ont un pliage à angle droit orienté vers le bas (24), dans la position de scellement les deux pliages angulaires (23, 24) de chaque barre de scellement (15 ; 17 ; 16; 18) étant disposés l'un (24) sur l'autre (23).

4. Dispositif selon la revendication 3, dans lequel, respectivement, deux demi-barres (15a, 17b ; 18a, 16b ; 15b, 18b ; 17a, 16a) sont disposées de manière angulaire sur le même plan horizontal (P1 ; P2) et supportées par une tige de commande commune (20; 23 ; 21 ; 22), lesquelles sont associées de manière fonctionnelle audit cône de commande vertical, lequel est mobile axialement.

5. Conditionnement scellé (6) pour une plaquette de fromage à pâte molle (W), ou analogue, fournie à l'état fondu ou semi-pâteux, comprenant un récipient en forme de boîte ouvert (3) fait de matériau thermoscellable synthétique et un couvercle de fermeture (7) également fait de matériau thermoscellable ayant un côté inférieur (8) et un bord périphérique continu plié de manière angulaire (9), avec des zones angulaires (9a, 9b, 9c, 9d) pliées sur elles-mêmes, le couvercle (7) étant introduit dans le récipient en forme de boîte ouvert (3) au-dessus de ladite plaquette (W), ledit récipient en forme de boîte ouvert (3) et ledit couvercle (7) étant scellés l'un à l'autre avec un scellement périphérique continu (Y), **caractérisé par le fait que** la ligne de scellement périphérique continu (Y) a, sur chaque côté du conditionnement (6), un développement linéaire étagé similaire à une lettre stylisée (Z).

6. Conditionnement selon la revendication 5, dans lequel, dans la découpe à la forme du couvercle (7), une languette (26) est prévue pour faciliter l'ouverture du conditionnement (6).

7. Machine pour produire des conditionnements scellés hermétiquement (6) pour des plaquettes de fromage à pâte dure ou molle (W), dans laquelle des produits sont fournis en vrac à l'état fondu ou semi-pâteux ou liquide, selon le procédé de la revendication 1, **caractérisée par le fait qu'**elle comprend un dispositif de scellement selon l'une quelconque des revendications 2 à 4.
